# EUROPÄISCHE PATENTSCHRIFT

(11) **EP 2 744 735 B1**
(45) Veröffentlichungstag und Bekanntmachung des Hinweises auf die Patenterteilung: **11.01.2017**
(21) Anmeldenummer: 12759071.9
(22) Anmeldetag: 04.09.2012
(51) Int. Cl.: B65G 35/06, B65G 54/02

(54) **TRANSPORTVORRICHTUNG**
TRANSPORT DEVICE
DISPOSITIF DE TRANSPORT

(30) Priorität: 09.09.2011 DE 102011113000
(43) Veröffentlichungstag der Anmeldung: 25.06.2014
(60) Teilanmeldung: 16200992.2
(73) Patentinhaber: Weiss GmbH, 74722 Buchen (Odw.) (DE)
(72) Erfinder: WEISS, Dieter, 74731 Walldürn (DE)
(74) Vertreter: Manitz, Finsterwald & Partner GbR
(86) Internationale Anmeldenummer: PCT/EP2012/067180
(87) Internationale Veröffentlichungsnummer: WO 2013/034534

(56) Entgegenhaltungen:
- EP-A2- 1 714 923
- WO-A2-2007/097899
- DE-A1-102009 029 314
- DE-U1- 29 816 285
- GB-A- 1 350 715
- JP-A- 57 137 218
- JP-A- 57 189 926
- NL-A- 8 401 073

## Beschreibung

Die vorliegende Erfindung betrifft eine Transportvorrichtung zum Transport von Objekten entlang einer Transportbahn.

Derartige Transportvorrichtungen dienen beispielsweise dazu, Werkstücke zwischen verschiedenen Bearbeitungs- oder Montagestellen einer Montagelinie zu transportieren. Die Objekte bewegen sich dabei entlang einer Transportbahn, die geradlinige und/oder gekrümmte Abschnitte aufweist. Bevorzugt kommen Transportvorrichtungen zum Einsatz, die eine geschlossene Transportbahn aufweisen.

Von wesentlicher Bedeutung ist, dass derartige Transportvorrichtungen zuverlässig arbeiten, um Ausfallzeiten der entsprechenden Montagelinie zu minimieren. Trotzdem sollen die Transportvorrichtungen kostengünstig in der Herstellung und Montage sein.

DE 298 16 285 U1 beschreibt eine gattungsgemäße Transportvorrichtung.

Die Lösung der Aufgabe, eine solche Transportvorrichtung zu schaffen, wird durch eine Transportvorrichtung mit den Merkmalen des Anspruchs 1 bereitgestellt.

Erfindungsgemäß umfasst die Transportvorrichtung zum Transport von Objekten entlang einer Transportbahn ein Antriebssystem, das zumindest zwei räumlich voneinander beabstandete ortsfeste Statorelemente aufweist, die mit einem Läuferelement zusammenwirken, das an einem zur Aufnahme zumindest eines Objekts geeigneten und entlang der Transportbahn verfahrbaren Transportelements angeordnet ist. Ein Abschnitt zwischen den Statorelementen ist in einer Richtung parallel zu der Transportbahn geringer als eine Längserstreckung des Läuferelements in ebenfalls dieser Richtung.

Mit anderen Worten bedient sich die Transportvorrichtung zumindest zweier - je nach Länge und Beschaffenheit der Transportbahn aber auch mehr - fest angeordneter Antriebseinheiten, die zusammen mit einem verfahrbaren Objektträger in Form eines Transportelements bzw. mit dem an diesem befestigten Läuferelement ein Antriebssystem bilden. Das Antriebssystem erstreckt sich nicht kontinuierlich entlang der Transportbahn, sondern umfasst diskrete Einheiten, die räumlich voneinander getrennt sind. Unter einem sich entlang der Transportbahn kontinuierlich erstreckenden Antriebssystem ist beispielsweise ein Antriebssystem zu verstehen, das aus mehreren aneinander gefügten Modulen besteht, die einen durchgehenden Stator (Langstator) bilden. Im Gegensatz dazu wird dem Transportelement bei der Transportvorrichtung gemäß der vorliegenden Erfindung durch verteilt angeordnete Statorelemente lediglich punktuell Antriebsenergie zugeführt.

Um stets ein ausreichend großes Antriebsmoment zum Verfahren des Transportelements bereitstellen zu können, ist der Abstand zwischen den Statorelementen derart bemessen, dass zu jedem Zeitpunkt zumindest eines der Statorelemente mit dem an dem Transportelement angebrachten Läuferelement zusammenwirkt. Mit anderen Worten ist sichergestellt, dass das Transportelement über eine Steuerung des Läuferelements und/oder zumindest eines der Statorelemente in der gewünschten Weise bewegt werden kann. Auch eine geeignete Positionierung des Transportelements in vorgegebenen Ruhepositionen, beispielsweise zur Bearbeitung und/oder Montage des auf dem Transportelement angeordneten Objekts, wird so ermöglicht.

Es versteht sich, dass grundsätzlich eine beliebige Anzahl von Statorelementen vorgesehen sein kann, um einen zuverlässigen Antrieb entlang der gesamten Transportbahn bereitstellen zu können. Die Statorelemente müssen nicht in regelmäßigen Abständen angeordnet sein, falls die Ausgestaltung der Transportbahn dies erforderlich macht.

Die erfindungsgemäße Transportvorrichtung ermöglicht durch die Sicherstellung eines Zusammenwirkens des Läuferelements mit zumindest einem der Statorelemente zu jedem Zeitpunkt - d.h. unabhängig von der Position des Transportelements - einen zuverlässigen Betrieb der Transportvorrichtung. Durch die geometrische Ausgestaltung des Antriebssystems mit diskreten, räumlich beabstandeten Statorelementen werden Herstellungs- und Montagekosten eingespart, da kein im Wesentlichen ununterbrochenes Statorelement bereitgestellt werden muss. Durch eine geeignete Dimensionierung des Läuferelements und der Abstände zwischen den Statorelementen wird trotzdem eine hinreichend exakte Bewegung und Positionierung des Transportelements ermöglicht. Zudem vereinfacht sich die Wartung der Transportvorrichtung und der von der Transportvorrichtung beanspruchte Bauraum wird spürbar reduziert.

Weitere Ausführungsformen der Erfindung sind in den Unteransprüchen, der Beschreibung und den Zeichnungen angegeben.

Um sicherzustellen, dass dem Transportelement zu jedem Zeitpunkt eine hinreichend große Vortriebskraft zugeführt werden kann, können der räumliche Abstand zwischen den Statorelementen, die Längserstreckung der Statorelemente - die insbesondere in Wesentlichen gleich lang sind - und die Längserstreckung des Läuferelements in geeigneter Weise aufeinander abgestimmt sein. Insbesondere sind die genannten Beträge so aufeinander abgestimmt, dass letztlich die Summe aller mit dem Läuferelement zusammenwirkenden Abschnitte der Statorelemente jederzeit - d.h. unabhängig von der Position des Transportelements - zumindest dem Betrag der Längserstreckung eines der Statorelemente parallel zu der Transportbahn entspricht. Mit anderen Worten wirkt zu einem gegebenen Zeitpunkt beispielsweise zumindest ein Statorelement in voller Länge mit dem Läuferelement zusammen. Bewegt sich das Transportelement weiter, so treten Zustände auf, in denen zum Beispiel zwei Statorelemente jeweils zumindest mit der Hälfte ihrer Längserstreckung oder ein Statorelement zu 1/3 seiner Länge und ein weiteres Statorelement zu 2/3 seiner Länge mit dem Läuferelement zusammenwirken. Die Vortriebskraft, die dem Transportelement zugeführt werden kann, entspricht daher stets zumindest der Kraft, die ein Statorelement maximal aufbringen kann. Zwar ist es auch möglich, einen größeren räumlichen Abstand zwischen zwei Statorelementen vorzusehen und/oder die Statorelemente bzw. das Läuferelement kürzer zu gestalten, allerdings hat sich die vorstehend beschriebene Auslegung in vielen Fällen als vorteilhaft erwiesen.

Gemäß einer Ausführungsform ist der räumliche Abstand zwischen den Statorelementen größer als die Hälfte der Längserstreckung der Statorelemente parallel zur Transportbahn. Eine derartige Dimensionierung bietet eine gute Balance zwischen der durch das Antriebssystem erzeugbaren Dynamik und den dafür benötigten Antriebskompontenten. Grundsätzlich ist es auch möglich, die Statorelemente näher beieinander anzuordnen - beispielsweise auch nur in bestimmten Abschnitten - um besonderen Dynamikvorgaben und/oder Ausgestaltungen der Transportbahn Rechnung tragen zu können. Es versteht sich, dass die Herstellungskosten der Transportvorrichtung unter anderem auch von dem Verhältnis der Gesamtlänge aller Statorelemente zur Länge der Transportbahn abhängen. Spürbare Kostenreduktionen ohne relevante Einbußen bei der Transportdynamik und der Präzision der Transportbewegung werden bereits ab einem Verhältnis von 1: 1,5 erreicht. Beispielsweise kann das genannte Verhältnis etwa 1:3,5 bis 1:5,5 betragen. In der Praxis hat es sich ferner erwiesen, dass beispielsweise Abstände zwischen den Statorelementen von mehr als 0,5 m, bevorzugt um 1 m, in vielen Fällen geeignet sind.

Es kann vorgesehen sein, dass die Statorelemente im Wesentlichen baugleich aufgebaut sind und insbesondere eine krümmungsfreie Längserstreckung aufweisen. D.h. die Statorelemente weisen einen modularen Charakter auf und sind so bei den unterschiedlichsten Transportbahnausgestaltungen einsetzbar.

Die Statorelemente können Spulen umfassen, die mit Permanentmagneten des Läuferelements zusammenwirken. Die Statorelemente und das Läuferelement bilden somit einen Linearmotor mit einem Stator, der diskrete, voneinander getrennte Elemente mit Spulenanordnungen umfasst.

Die Statorelemente können individuell ansteuerbar sein, um eine exakte Positionierung und/oder Beschleunigung des Transportelements sicherstellen zu können. Bei bestimmten Anwendungen sind die Ansprüche an eine Präzision der Transportbewegung geringer und Kostenfaktoren stehen im Vordergrund. Dann kann es vorteilhaft sein, wenn alle oder ein Teil der Statorelemente parallel geschaltet sind und gemeinsam ansteuerbar sind. Beispielsweise werden die Statorelemente parallel von einem Verstärker mit Energie versorgt, so dass die Anzahl der zur Steuerung der Transportvorrichtung erforderlichen Komponenten minimiert wird. Falls eine bestimmte Vorrichtung für einen anderen Anwendungsfall wieder präziser angesteuert werden soll, kann die parallele Schaltung der Motoren durch eine individuelle Ansteuerung ersetzt werden. Eine Anpassung der Transportvorrichtung an die jeweils vorliegenden Anforderungen kann somit mit minimalem Aufwand durchgeführt werden.

Eine Vereinfachung des Aufbaus der Transportvorrichtung wird erreicht, wenn das Läuferelement in Segmente unterteilt ist, die in Längsrichtung der Transportbahn gesehen derart räumlich getrennt voneinander angeordnet sind, dass zu jedem Zeitpunkt - d.h. unabhängig von der Position des Transportelements - zumindest eines der Segmente mit einem der Statorelemente zusammenwirkt. Diese Ausgestaltung des Läuferelements ist insbesondere dann vorteilhaft, wenn das Transportelement mehrere separate Transporteinheiten umfasst, die miteinander gekoppelt sind und die insbesondere im Wesentlichen baugleich sind. Dabei kann jeder der Transporteinheiten zumindest ein Segment des Läuferelements zugeordnet sein.

Gemäß einer vorteilhaften Ausführungform sind die Statorelemente separat von der Transportbahn angeordnet. D.h. sie sind nicht in die Transportbahn integriert oder direkt an ihr befestigt. Insbesondere sind die Statorelemente parallel versetzt zu der Transportbahn angeordnet. Beispielsweise kann ein räumlicher Abstand zwischen den Statorelementen und der Transportbahn in einer Richtung senkrecht zu der Längserstreckung der Transportbahn größer sein als ein räumlicher Abstand zwischen dem Läuferelement und der Transportbahn in einer Richtung senkrecht zu der Längserstreckung der Transportbahn. Alternativ oder zusätzlich kann der räumliche Abstand zwischen den Statorelementen und der Transportbahn größer sein als ein räumlicher Abstand zwischen einem zur Führung des Transportelements entlang der Transportbahn vorgesehenen Führungsmittel und der Transportbahn, wobei sich die beiden vorstehend genannten Abstände ebenfalls auf eine Richtung senkrecht zu der Längserstreckung der Transportbahn beziehen. Grundsätzlich ist es auch möglich, dass der räumliche Abstand zwischen dem Führungsmittel und der Transportbahn kleiner ist als der räumliche Abstand zwischen dem Läuferelement und der Transportbahn.

Insbesondere ist das Läuferelement derart angeordnet, dass es bei einem Passieren eines Statorelements zwischen dem Statorelement und der Transportbahn angeordnet ist. Bildlich gesprochen fährt das Läuferelement bei dieser Ausführungsform der Transportvorrichtung zwischen dem Statorelement und der Transportbahn an dem Statorelement vorbei. Ferner ist es möglich, dass an dem Transportelement ein Führungsmittel zur Führung der Bewegung des Transportelements entlang der Transportbahn vorgesehenen ist. Das Führungsmittel ist dabei derart angeordnet, dass es bei einem Passieren eines Statorelements zwischen dem Statorelement und der Transportbahn angeordnet ist.

Die Transportbahn kann eine Schiene umfassen, die das Transportelement entlang der Transportbahn führt, wobei das Transportelement Rollen umfasst, die in Bezug auf die Schiene einander gegenüberliegend angeordnet sind und die mit Seitenflächen der Schiene in Kontakt stehen. Mit anderen Worten gleicht die Transportvorrichtung in diesem Aspekt in gewisser Hinsicht einer Einschienenbahn ("Monorail"). Die Rollen des Transportelements liegen dabei nicht auf der Schiene auf, sondern umgreifen diese seitlich, um eine möglichst gute Führung des Transportelements zu gewährleisten.

Die Statorelemente weisen erfindungsgemäß jeweils zwei Statoreinheiten auf, die einander gegenüberliegend beidseitig eines Abschnitts der Transportbahn angeordnet sind. Beispielsweise sind die Statoreinheiten in Bezug auf die Transportbahn - z.B. zu einer in Längsrichtung der Transportbahn verlaufenden Mittelebene oder Symmetrieebene der Transportbahn - symmetrisch angeordnet. Entsprechend weist das Läuferelement erfindungsgemäß zumindest zwei in Bezug auf die Transportbahn parallel versetzt angeordnete Funktionsabschnitte auf, die jeweils mit einer der Statoreinheiten zusammenwirken, d.h. die Funktionsabschnitte können beispielsweise ebenfalls symmetrisch in Bezug auf die Transportbahn angeordnet sein.

Durch die vorstehend beschriebene Ausgestaltung wird bewirkt, dass die durch das Antriebssystem seitlich auf das Transportelement wirkenden Kräfte kompensiert werden, wodurch die Belastung der das Transportelement führenden Einrichtung minimiert wird. Beispielsweise entstehen durch das von einem Statorelement erzeugte Magnetfeld nicht nur das Transportelement vorantreibende Kräfte. Zusätzlich werden auch starke anziehende Kräfte zwischen dem Statorelement und dem Läuferabschnitt erzeugt. Bei einer Anordnung von Statoreinheit/Funktionsabschnitt-Paarungen beidseitig der Transportbahn, kompensieren sich die beschriebenen anziehenden Kräfte zumindest teilweise, wodurch die Führung des Transportelements einfacher ausgestaltet werden kann und geringere Reibungskräfte auftreten.

Eine besonders gute Führung des Transportelements wird erreicht, wenn die Rollen symmetrisch zu einer Ebene angeordnet sind, die mit einer Symmetrieebene der Statorelemente und/oder des Läuferelements zusammenfällt oder die nur geringfügig parallel versetzt zu der Symmetrieebene angeordnet ist, wobei die Symmetrieebene parallel zu der Längserstreckung der Statorelemente oder des Läuferelements verläuft. Dadurch wirken senkrecht zur Längserstreckung der Schiene zwischen dem Statorelement und dem Läuferelement wirkende Kräfte senkrecht auf die Rollen und verkippende Hebelmomente werden minimiert.

Die Transportvorrichtung kann ein Positionsüberwachungssystem umfassen, das eine an dem Transportelement angeordnete Codierung und je Statorelement zumindest eine Leseeinrichtung umfasst, mit der die Codierung erfassbar ist. Insbesondere ist die Leseeinrichtung an dem Statorelement angeordnet. Ein derartiges Positionsüberwachungssystem ermöglicht eine präzise Steuerung der Transportvorrichtung. Die Codierung und die Leseeinrichtung können beispielsweise auf einem optischen oder magnetischen Verfahren basieren.

Nachfolgend wird die vorliegende Erfindung rein beispielhaft anhand vorteilhafter Ausführungsformen unter Bezugnahme auf die beigefügten Zeichnungen erläutert. Es zeigen:
- Fig. 1: eine Ausführungsform der erfindungsgemäßen Transportvorrichtung,
- Fig. 2: eine Ansicht eines Moduls der in Fig. 1 gezeigten Ausführungsform der Transportvorrichtung,
- Fig. 3: eine perspektivische Ansicht eines Statorelements und eines in dieses einfahrenden Palettenzugs,
- Fig. 4: einen Querschnitt durch ein Statorelement und einen Palettenwagen.

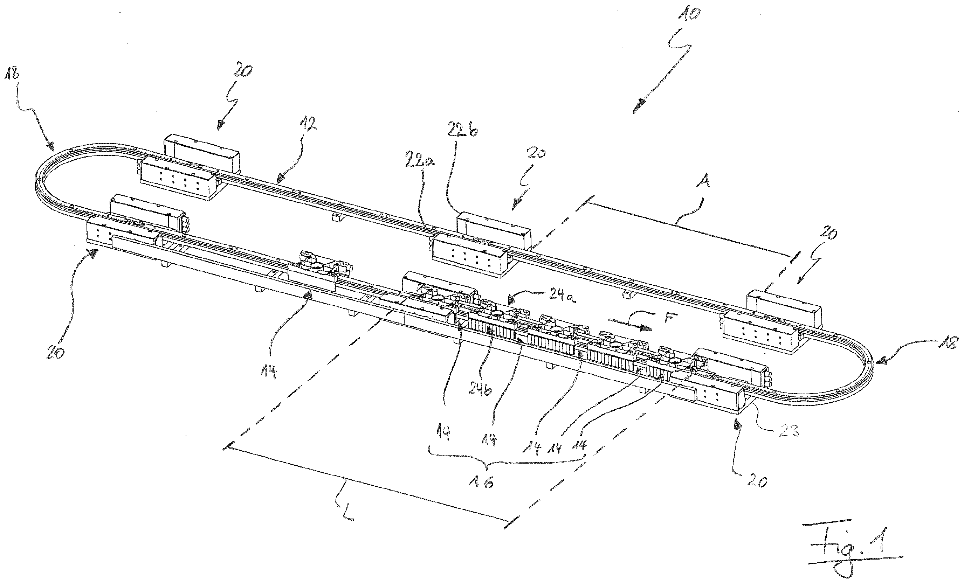

Fig. 1 zeigt eine Transportvorrichtung 10 zum Transport von Objekten entlang einer Schiene 12, die eine Transportbahn definiert, entlang derer die Objekte transportiert werden.

Die zu transportierenden Objekte sind auf nicht gezeigten Transportplattformen von Palettenwagen 14 angeordnet, die zu einem Palettenzug 16 zusammengefasst sind. Ein einzelner Palettenwagen 14 ist ebenfalls gezeigt. Aufgrund einer flexiblen Kopplung der Palettenwagen 14 des Palettenzugs 16 können Kurven 18 im Verlauf der Schiene 12 problemlos bewältigt werden.

Ein Antrieb des Palettenzugs 16 basiert auf dem Funktionsprinzip eines Linearmotors. Dazu sind Statoren 20 vorgesehen, die jeweils beidseitig der Schiene 12 symmetrisch angeordnete Statoreinheiten 22a, 22b aufweisen. Die Statoreinheiten 22a, 22b sind jeweils - wie nachfolgend noch näher beschrieben - mit einer Mehrzahl von Spulen versehen. Die Statoreinheiten 22a, 22b sind jeweils an einer gemeinsamen Basis 23 angeordnet, die auch mit der Schiene 12 verbunden ist. Die Statoreinheiten 22a, 22b stehen somit nur indirekt mit der Schiene 12 in Verbindung. Sie sind daher funktionell und räumlich von der Schiene 12 getrennte Komponenten.

Der Läufer des Linearmotors wird letztlich durch den Palettenzug 16 gebildet. Zu diesem Zweck weisen die Palettenwagen 14 Permanentmagnetsegmente 24a, 24b auf, die jeweils den Statoreinheiten 22a bzw. 22b zugeordnet sind. Der Palettenzug 16 ist dabei von derartiger Länge L, dass sich stets wenigstens ein Palettenwagen 14 zumindest teilweise im Bereich einer der Statoren 20 befindet.

In Fig. 1 ist gezeigt, dass der in Fahrtrichtung F vorderste Palettenwagen 14 schon teilweise in den Stator 20 rechts unten eingefahren ist, während sich der in Fahrtrichtung F letzte Palettenwagen 14 noch vollständig im Bereich des in Fahrtrichtung F weiter vorne liegenden Stators 20 befindet. Durch eine geeignete Ansteuerung der beiden genannten Statoren 20, d.h. durch eine geeignete Bestromung von deren Spulen, kann eine Kraft auf den Palettenzug 16 ausgeübt werden, um diesen zu beschleunigen, abzubremsen und/oder mit einer vorgegebenen konstanten Geschwindigkeit fortzubewegen. Auch eine exakte Positionierung des Palettenzugs 16 ist durch eine geeignete Ansteuerung der Statoren 20 ohne weiteres möglich, um die auf den Palettenwägen 14 angeordneten Objekte beispielsweise bearbeiten zu können.

Im Gegensatz zu herkömmlichen Antriebssystemen, die einen im Wesentlichen durchgehenden Stator aufweisen, ist das Antriebssystem der Transportvorrichtung 10 einfacher und daher kostengünstiger aufgebaut. Die jeweiligen Abstände A zwischen benachbarten Statoren 20 sind stets kürzer als die Länge L des Palettenzugs 16, um - wie vorstehend bereits beschrieben - sicherzustellen, dass stets zumindest ein Palettenwagen 14 (bzw. dessen Magnetsegmente 24a, 24b) mit den Statoreinheiten 22a, 22b eines der Statoren 20 zusammenwirken kann. Auch die Länge der Kurven 18 ist entsprechend abgestimmt.

Es versteht sich, dass der Abstand A der Statoren 20 bei Verwendung eines kürzeren Palettenzugs 16 verringert werden muss, um die vorstehend mehrfach beschriebene geometrische Abstimmung der beiden Parameter zu erfüllen (A < L). Umgekehrt kann der Palettenzug 16 ohne weiteres verlängert werden, ohne dass zusätzliche Statoren 20 vorgesehen werden müssen.

Insbesondere ist die Länge L des Palettenzugs 16 zumindest so groß wie die Summe eines maximalen Abstands A zwischen benachbarten Statoren 20 und einer Statorlänge. Dadurch wird sichergestellt, dass jederzeit zumindest die von einem Stator 20 erzeugbare Vortriebskraft zur Verfügung gestellt werden kann, falls dies erforderlich ist.

Durch die Verwendung von flexibel gekoppelten Palettenwagen 14 ergeben sich Abstände zwischen den Permanentmagnetsegmenten 24a, 24b benachbarter Palettenwagen 14. Die Länge der Statoren 20 ist allerdings so bemessen, dass sie größer ist als dieser Abstand, so dass ein stets ausreichend langer Abschnitt der Permanentmagnetsegmente 24a, 24b im Bereich der Statoreinheiten 22a, 22b angeordnet ist, um eine zuverlässige Kontrolle über den Palettenzug 16 zu gewährleisten.

Abweichend von der dargestellten Transportvorrichtung 10 kann die Schiene 12 grundsätzlich beliebig ausgestaltete Transportbahnen definieren, um den jeweiligen Anforderungen gerecht zu werden. Auch kann - falls erforderlich und/oder vorteilhaft - anstelle eines Palettenzugs 16 ein einzelner, entsprechend langer Palettenwagen 14 genutzt werden.

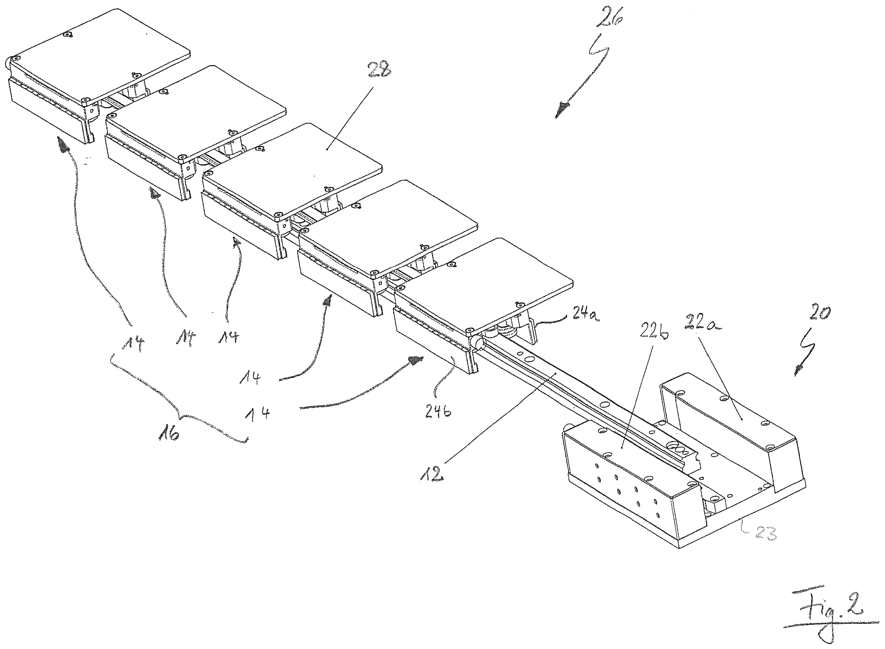

Fig. 2 zeigt ein Transportbahnmodul 26, das einen Abschnitt der Schiene 12 und einen der Statoren 20 umfasst. Eine Transportvorrichtung kann sich im Wesentlichen aus derartigen Modulen 26 zusammensetzen, wobei vorgesehen sein kann, zwischen verschiedenen Statoren 20 auch gekrümmte Schienenabschnitte vorzusehen. Zwar ist es grundsätzlich auch möglich, Statoren 20 vorzusehen, die sich einem gekrümmten Verlauf der Schiene 12 anpassen. Allerdings ist die in den Fig. 1 und 2 gezeigte lineare Ausgestaltung der Statoren 20 auch aufgrund der einfacheren Bauweise bevorzugt.

Neben dem Transportbahnmodul 26 zeigt Fig. 2 auch den Palettenzug 16 in einer perspektivischen Ansicht. Im Gegensatz zu der Fig. 1 sind die gekoppelten Palettenwagen 14 nun jeweils mit einer Arbeitsplatte 28 versehen, auf der das zu transportierende Objekt angeordnet werden kann.

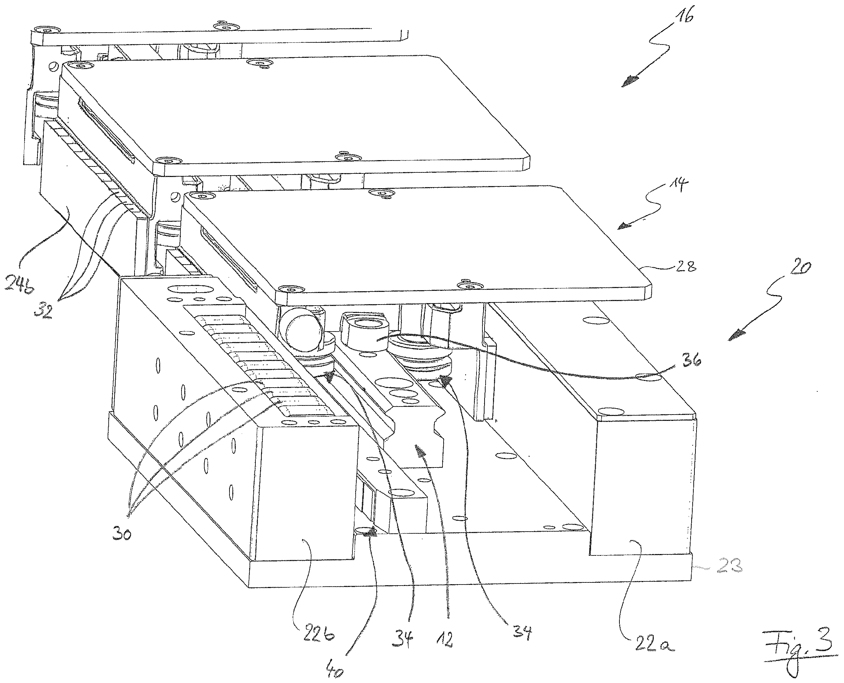

Fig. 3 zeigt eine Perspektivansicht eines der Statoren 20 mit einem in diesen einfahrenden Palettenwagen 14 des Palettenzugs 16. Die Statoreinheiten 22a, 22b weisen jeweils eine Mehrzahl von Spulen 30 auf, die mit Permanentmagneten 32 der Permanentmagnetsegmente 24a, 24b nach hinlänglich bekannter Art eines Linearmotors zusammenwirken. Die bei Bestromung der Spulen 30 auftretenden Magnetfelder erzeugen nicht nur einen Vortrieb des Palettenwagens 14. Als "Nebenprodukt" wird auch eine starke Kraft erzeugt, die die Permanentmagnetsegmente 24a, 24b an die jeweilige Statoreinheit 22a bzw. 22b zieht. Da die zwischen den Komponentenpaarungen 22a/24a bzw. 22b/24b wirkenden Kräfte die gleiche Richtung aber ein entgegengesetztes Vorzeichen aufweisen, kompensieren sie sich im Wesentlichen, so dass die seitlich auf den Palettenwagen 14 wirkende Gesamtkraft minimiert wird.

Die Palettenwägen 14 weisen neben der bereits beschriebenen Arbeitsplatte 28 und den Permanentmagnetsegmenten 24a, 24b auch Rollen 34 auf, die die Schiene 12 umgreifen und die mit deren Seitenwänden zusammenwirken. Durch diese Anordnung werden eventuell auftretende Restkomponenten der vorstehend beschriebenen Anziehungskräfte zwischen den Statoreinheiten 22a, 22b und den entsprechenden Permanentmagnetsegmenten 24a bzw. 24b aufgenommen. Eine gute Zentrierung der Rollen 34 wird durch eine keilförmige Ausbildung eines Teils der Seitenwände der Schiene 12 erzeugt, die in eine entsprechend geformten Nut der Rollen 34 eingreift.

Zur Kopplung der Palettenwägen 14 ist an der Vorder- und/oder Rückseite der Palettenwägen 14 jeweils ein Kopplungsflansch 36 vorgesehen.

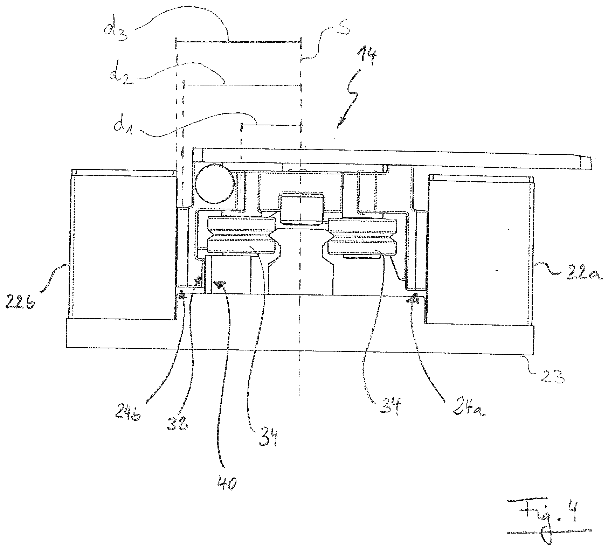

Fig. 4 zeigt die anhand von Fig. 3 beschriebenen Komponenten nochmals in einem Querschnitt, wodurch die kompakte Bauweise des Antriebssystems verdeutlicht wird. Diese Bauweise zeichnet sich durch eine "Verschachtelung" der entsprechenden Komponenten aus. D.h. die Statoreinheiten 22a, 22b sind von einer Mittelebene S der Schiene 12 beabstandet angeordnet, so dass die Palettenwägen 14 zwischen ihnen hindurch fahren können. Ein Abstand d₃ der Statoreinheiten 22a, 22b von der Mittelebene S ist folglich größer als ein Abstand d₂ der Permanentmagnetsegmente 24a, 24b von der Mittelebene S. Noch weiter innen liegen die Rollen 34, deren Drehachsen einen Abstand d₁ von der Mittelebene S aufweisen.

Die Statoreinheiten 22a, 22b sind somit nicht in die Schiene 12 integriert, was - verglichen mit einem Antriebskonzept, das in die Schiene integrierte oder an dieser direkt befestigte Statoren umfasst - eine einfachere Bauweise des Antriebssystems und damit Kostenvorteile zur Folge hat.

Neben den Rollen 34 sind keine beweglichen Komponenten zum Betrieb der Transportvorrichtung 10 erforderlich, was einen wartungsarmen und zuverlässigen Betrieb sicherstellt. Außerdem lassen sich Antriebssysteme der beschriebenen Art auf effiziente Weise betreiben, da sie funktionell auf dem Prinzip eines Linearmotors basieren. Gleichzeitig werden gegenüber herkömmlichen Systemen Kostenvorteile erzielt, da die Anzahl von erforderlichen Spulen 30 reduziert werden kann, d.h. ein Langstator-Konzept mit einem im Wesentlichen kontinuierlichen Stator wird durch ein auf einfache Weise erweiterbares und wartungsarmes System mit einer Mehrzahl von unabhängigen Statoren ersetzt.

Zur verbesserten Steuerung der Bewegung des Palettenzugs 16 sind die Palettenwägen 14 jeweils mit einem Codierungsstreifen 38 versehen. Die in ihm abgelegten Informationen können durch Leseköpfe 40 ausgelesen werden. Diese Informationen dienen zur exakten Bestimmung der Position des im Bereich des Stators 20 befindlichen Palettenwagens 14 und damit letztlich des Palettenzuges 16. Alternativ oder zusätzlich kann der Codierungsstreifen 38 auch andere Informationen enthalten, wie z.B. eine Information bezüglich des auf den entsprechenden Palettenwagen 14 angeordneten Objekts.

Bei der Verwendung lediglich eines Lesekopfs 40 je Stator 20 tritt bei einer Bewegung des Palettenzugs 16 unter Umständen das Problem auf, dass der Lesekopf 40 kein Signal erhält, wenn ihn einer der Zwischenräum zwischen benachbarten Palettenwägen 14 passiert. Der Lesekopf 40 erzeugt daher ein Fehlersignal und muss zurückgesetzt werden, was eine kurzzeitige Unterbrechung der Positionsüberwachung zur Folge haben kann. Um dies zu verhindern, können zwei Leseköpfe 40 je Stator 20 vorgesehen sein, deren Abstand in Fortbewegungsrichtung des Palettenzugs 16 größer ist als der Zwischenraum zwischen benachbarten Palettenwägen 14. Dadurch wird sichergestellt, dass stets zumindest einer der Leseköpfe 40 ein Signal des Codierungsstreifens 38 ausliest. Bei geeigneter Verknüpfung der Leseköpfe 40 bzw. bei einer geeigneten Auswertung ihrer Ausgangssignale kann daher die Positionsbestimmung des Palettenzugs 16 und die Steuerung von dessen Bewegung verbessert werden.

Grundsätzlich ist es auch möglich, einen Codierungsstreifen 38 mit einer Codierungslänge zu verwenden, die länger ist als die Transportbahn der Transportvorrichtung 10. Der Codierungsstreifen 38 wird in diesem Fall so an den Palettenwägen 14 angebracht, dass die in dem Codierungsstreifen 38 enthaltene absolute Längeninformation korrekt die Länge des Palettenzugs 16 wiedergibt. Mit anderen Worten müssen die Zwischenräume zwischen den einzelnen Palettenwägen 14 berücksichtigt werden, indem entsprechende Abschnitte aus dem Codierungsstreifen 38 entfernt werden. So kann durch den oder die Leseköpfe 40 exakt ausgelesen werden, welcher Palettenwagen 14 sich wo befindet. Der Codierungsstreifen 38 dient bei dieser Ausgestaltung somit nicht nur zur Positionsbestimmung sondern ermöglicht auch die Identifizierung der einzelnen Palettenwägen 14.

### Bezugszeichenliste

- 10: Transportvorrichtung
- 12: Schiene
- 14: Palettenwagen
- 16: Palettenzug
- 18: Kurve
- 20: Stator
- 22a, 22b: Statoreinheit
- 23: Basis
- 24a, 24b: Permanentmagnetsegment
- 26: Transportbahnmodul
- 28: Arbeitsplatte
- 30: Spule
- 32: Permanentmagnet
- 34: Rolle
- 36: Kopplungsflansch
- 38: Codierungsstreifen
- 40: Lesekopf
- F: Fahrtrichtung
- A, d₁, d₂, d₃: Abstand
- L: Länge
- S: Mittelebene

## Patentansprüche

1. Transportvorrichtung zum Transport von Objekten entlang einer Transportbahn (12), mit einem Antriebssystem, das zumindest zwei räumlich voneinander beabstandete ortsfeste Statorelemente (20) aufweist, die mit einem Läuferelement (24a, 24b) zusammenwirken, das an einem zur Aufnahme zumindest eines Objekts geeigneten und entlang der Transportbahn (12) verfahrbaren Transportelement (16) angeordnet ist, wobei ein Abstand zwischen den Statorelementen (20) in einer Richtung parallel zu der Transportbahn (12) geringer ist als die Längserstreckung des Läuferelements (24a, 24b),
**dadurch gekennzeichnet, dass**
die Statorelemente (20) jeweils zwei Statoreinheiten (22a, 22b) aufweisen, die einander gegenüberliegend beidseitig eines Abschnitts der Transportbahn (12) angeordnet sind, und dass das Läuferelement zumindest zwei in Bezug auf die Transportbahn (12) parallel versetzt angeordnete Funktionsabschnitte (24a, 24b) aufweist, die jeweils mit einer der Statoreneinheiten (22a bzw. 22b) zusammenwirken.

2. Transportvorrichtung nach Anspruch 1,
**dadurch gekennzeichnet, dass**
der räumliche Abstand zwischen den Statorelementen (20), die Längserstreckung der Statorelemente (20) parallel zur Transportbahn (12) und die Längserstreckung des Läuferelements (24a, 24b) so aufeinander abgestimmt sind, dass zu jedem Zeitpunkt ein oder mehrere Statorelemente (20) mit dem Läuferelement (24a, 24b) zusammenwirken, wobei die Summe der mit dem Läuferelement (24a, 24b) zusammenwirkenden Abschnitte der Statorelemente (20) zumindest der Längserstreckung eines der Statorelemente (20) parallel zu der Transportbahn (12) entspricht.

3. Transportvorrichtung nach zumindest einem der vorstehenden Ansprüche,
**dadurch gekennzeichnet, dass**
der räumliche Abstand zwischen den Statorelementen (20) größer ist als die Hälfte der Längserstreckung der Statorelemente (20) parallel zur Transportbahn (12) und/oder dass ein Verhältnis einer Summe der Längserstreckungen der Statorelemente (20) parallel zur Transportbahn (12) zu einer Gesamtlänge der Transportbahn (12) kleiner ist als 1:1,5, wobei das Verhältnis insbesondere zwischen 1:3,5 und 1:5,5 liegt.

4. Transportvorrichtung nach zumindest einem der vorstehenden Ansprüche,
**dadurch gekennzeichnet, dass**
die Statorelemente (20) im Wesentlichen baugleich aufgebaut sind und insbesondere eine krümmungsfreie Längserstreckung aufweisen und/oder dass die Statorelemente (20) separat von der Transportbahn (12) angeordnet sind, insbesondere wobei die Statorelemente (20) parallel versetzt zu der Transportbahn (12) angeordnet sind.

5. Transportvorrichtung nach zumindest einem der vorstehenden Ansprüche,
**dadurch gekennzeichnet, dass**
die Statorelemente (20) individuell ansteuerbar sind und/oder dass die Statorelemente (20) parallel geschaltet und gemeinsam ansteuerbar sind.

6. Transportvorrichtung nach zumindest einem der vorstehenden Ansprüche,
**dadurch gekennzeichnet, dass**
das Läuferelement in Segmente (24a, 24b) unterteilt ist, die in Längsrichtung der Transportbahn (12) gesehen derart räumlich voneinander getrennt angeordnet sind, dass zu jedem Zeitpunkt zumindest eines der Segmente (24a, 24b) mit einem der Statorelemente (20) zusammenwirkt.

7. Transportvorrichtung nach zumindest einem der vorstehenden Ansprüche,
**dadurch gekennzeichnet, dass**
das Transportelement (16) mehrere Transporteinheiten (14) umfasst, die miteinander gekoppelt sind und die insbesondere im Wesentlichen baugleich sind und/oder dass jeder Transporteinheit (14) zumindest ein Segment (24a, 24b) des Läuferelements zugeordnet ist.

8. Transportvorrichtung nach Anspruch 7,
**dadurch gekennzeichnet, dass**
ein räumlicher Abstand (d₃) zwischen den Statorelementen (20) und der Transportbahn (12) in einer Richtung senkrecht zu der Längserstreckung der Transportbahn (12) größer ist als ein räumlicher Abstand (d₂) zwischen dem Läuferelement (24a, 24b) und der Transportbahn (12) in einer Richtung senkrecht zu der Längserstreckung der Transportbahn (12) und/oder als ein räumlicher Abstand (d₁) zwischen einem zur Führung des Transportelements (16) entlang der Transportbahn (12) vorgesehenen Führungsmittel (34) und der Transportbahn (12) in einer Richtung senkrecht zu der Längserstreckung der Transportbahn (12).

9. Transportvorrichtung nach Anspruch 7 oder 8,
**dadurch gekennzeichnet, dass**
das Läuferelement (24a, 24b) derart angeordnet ist, dass es bei einem Passieren eines Statorelements (20) zwischen dem Statorelement (20) und der Transportbahn (12) angeordnet ist.

10. Transportvorrichtung nach zumindest einem der vorstehenden Ansprüche,
**dadurch gekennzeichnet, dass**
an dem Transportelement (16) ein Führungsmittel (34) zur Führung der Bewegung des Transportelements (16) entlang der Transportbahn (12) vorgesehenen ist, wobei das Führungsmittel (34) derart angeordnet ist, dass es bei einem Passieren eines Statorelements (20) zwischen dem Statorelement (20) und der Transportbahn angeordnet ist.

11. Transportvorrichtung nach Anspruch 1,
**dadurch gekennzeichnet, dass**
die Transportbahn eine Schiene (12) umfasst, die das Transportelement (16) entlang der Transportbahn führt, wobei das Transportelement (16) Rollen (34) umfasst, die in Bezug auf die Schiene (12) einander gegenüberliegend angeordnet sind und die mit Seitenflächen der Schiene (12) in Kontakt stehen.

12. Transportvorrichtung nach Anspruch 11,
**dadurch gekennzeichnet, dass**
die Rollen (34) symmetrisch zu einer Ebene angeordnet sind, die mit einer Symmetrieebene der Statorelemente (20) und/oder des Läuferelements zusammenfällt, wobei die Symmetrieebene parallel zu der Längserstreckung der Statorelemente (20) oder des Läuferelements (24a, 24b) verläuft.

13. Transportvorrichtung nach Anspruch 1,
**dadurch gekennzeichnet, dass**
die Statoreinheiten (22a, 22b) und/oder die Funktionsabschnitte (24a, 24b) symmetrisch zu einer in Längsrichtung der Transportbahn (12) verlaufenden Mittelebene (S) der Transportbahn (12) angeordnet sind.

## Claims

1. A transport apparatus for the transport of objects along a transport track (12) having a drive system which has at least two stationary stator elements (20) which are spaced apart from one another spatially and which cooperate with a rotor element (24a, 24b) which is arranged at a transport element (16) suitable for receiving at least one object and movable along the transport track (12), wherein a distance between the stator elements (20) in a direction parallel to the transport track (12) is smaller than the longitudinal extent of the rotor element (24a, 24b),
**characterized in that**
the stator elements (20) each have two stator units (22a, 22b) which are arranged mutually opposite one another at both sides of a section of the transport track (12); and **in that** the rotor element has at least two functional sections (24a, 24b) which are arranged offset in parallel with respect to the transport track (12) and which each cooperate with one of the stator units (22a and 22b respectively).

2. A transport apparatus in accordance with claim 1,
**characterized in that**
the spatial distance between the stator elements (20), the longitudinal extent of the stator elements (20) parallel to the transport track (12) and the longitudinal extent of the rotor element (24a, 24b) are coordinated with one another such that one or more stator elements (20) cooperate with the rotor element (24a, 24b) at all times, with the sum of the sections of the stator elements (20) cooperating with the rotor element (24a, 24b) corresponding to at least the longitudinal extent of one of the stator elements (20) parallel to the transport track (12).

3. A transport apparatus in accordance with at least one of the preceding claims,
**characterized in that**
the spatial distance between the stator elements (20) is larger than half the longitudinal extent of the stator elements (20) parallel to the transport track (12); and/or **in that** a ratio of a sum of the longitudinal extents of the stator elements (20) parallel to the transport track (12) to a total length of the transport track (12) is smaller than 1:1.5, with the ratio in particular lying between 1:3.5 and 1:5.5.

4. A transport apparatus in accordance with at least one of the preceding claims,
**characterized in that**
the stator elements (20) have substantially the same construction structure and in particular have a curve-free longitudinal extent; and/or **in that** the stator elements (20) are arranged separately from the transport track (12), in particular with the stator elements (20) being arranged offset in parallel to the transport track (12).

5. A transport apparatus in accordance with at least one of the preceding claims,
**characterized in that**
the stator elements (20) can be individually controlled; and/or **in that** the stator elements (20) are connected in parallel and can be controlled together.

6. A transport apparatus in accordance with at least one of the preceding claims,
**characterized in that**
the rotor element is divided into segments (24a, 24b) which are arranged spatially separate from one another, viewed in the longitudinal direction of the transport track (12), such that at least one of the segments (24a, 24b) cooperates with one of the stator elements (20) at all times.

7. A transport apparatus in accordance with at least one of the preceding claims,
**characterized in that**
the transport element (16) comprises a plurality of transport units (14) which are coupled to one another and which are in particular substantially of the same construction; and/or **in that** at least one segment (24a, 24b) of the rotor element is associated with each transport unit (14).

8. A transport apparatus in accordance with claim 7,
**characterized in that**
a spatial distance (d₃) between the stator elements (20) and the transport track (12) in a direction perpendicular to the longitudinal extent of the transport track (12) is larger than a spatial distance (d₂) between the rotor element (24a, 24b) and the transport track (12) in a direction perpendicular to the longitudinal extent of the transport track (12) and/or than a spatial distance (d₁) between a guide means (34) provided for guiding the transport element (16) along the transport track (12) and the transport track (12) in a direction perpendicular to the longitudinal extent of the transport track (12).

9. A transport apparatus in accordance with claim 7 or claim 8,
**characterized in that**
the rotor element (24a, 24b) is arranged such that it is arranged between the stator element (20) and the transport track (12) on passing a stator element (20).

10. A transport apparatus in accordance with at least one of the preceding claims,
**characterized in that**
a guide means (34) for guiding the movement of the transport element (16) along the transport track (12) is provided at the transport element (16), with the guide means (34) being arranged such that it is arranged between the stator element (20) and the transport track on passing a stator element (20).

11. A transport apparatus in accordance with claim 1,
**characterized in that**
the transport track comprises a rail (12) which conducts the transport element (16) along the transport track, with the transport element (16) comprising rollers (34) which are arranged disposed opposite one another with respect to the rail (12) and which are in contact with side surfaces of the rail (12).

12. A transport apparatus in accordance with claim 11,
**characterized in that**
the rollers (34) are arranged symmetrically to a plane which coincides with a plane of symmetry of the stator elements (20) and/or of the rotor element, with the plane of symmetry extending parallel to the longitudinal extent of the stator elements (20) or of the rotor element (24a, 24b).

13. A transport apparatus in accordance with claim 1,
**characterized in that**
the stator units (22a, 22b) and/or the functional sections (24a, 24b) are arranged symmetrically to a central plane (S) of the transport track (12) extending in the longitudinal direction of the transport track (12).

## Revendications

1. Dispositif de transport pour transporter des objets le long d'une voie de transport (12), comportant un système d'entraînement qui présente au moins deux éléments de stator (20) stationnaires à distance l'un de l'autre dans l'espace qui coopèrent avec un élément circulant (24a, 24b) qui est agencé sur un élément de transport (16) approprié pour recevoir au moins un objet et déplaçable le long de la voie de transport (12), dans lequel une distance entre les éléments de stator (20) dans une direction parallèle à la voie de transport (12) est inférieure à l'extension longitudinale de l'élément circulant (24a, 24b),
**caractérisé en ce que**
les éléments de stator (20) présentent chacun deux unités de stator (22a, 22b) qui sont agencées l'une en face de l'autre des deux côtés d'un tronçon de la voie de transport (12), et **en ce que** l'élément circulant présente au moins deux tronçons fonctionnels (24a, 24b) agencés en parallèle et en décalage par rapport à la voie de transport (12), lesquels coopèrent chacun avec une des unités de stator (22a ou 22b).

2. Dispositif de transport selon la revendication 1,
**caractérisé en ce que**
l'espace entre les éléments de stator (20), l'extension longitudinale des éléments de stator (20) parallèlement à la voie de transport (12) et l'extension longitudinale de l'élément circulant (24a, 24b) sont adaptés les unes aux autres de telle sorte qu'à tout moment, un ou plusieurs éléments de stator (20) coopèrent avec l'élément circulant (24a, 24b), la somme des tronçons des éléments de stator (20) coopérant avec l'élément circulant (24a, 24b) correspondant au moins à l'extension longitudinale d'un des éléments de stator (20) parallèlement à la voie de transport (12).

3. Dispositif de transport selon au moins l'une des revendications précédentes,
**caractérisé en ce que**
l'espace entre les éléments de stator (20) est supérieur à la moitié de l'extension longitudinale des éléments de stator (20) parallèlement à la voie de transport (12), et/ou **en ce qu'**un rapport d'une somme des extensions longitudinales des éléments de stator (20) parallèlement à la voie de transport (12) sur une longueur totale de la voie de transport (12) est inférieure à 1:1,5, le rapport étant en particulier entre 1:3,5 et 1:5,5.

4. Dispositif de transport selon au moins l'une des revendications précédentes,
**caractérisé en ce que**
les éléments de stator (20) ont sensiblement la même construction et présentent en particulier une extension longitudinale exempte de courbure, et/ou **en ce que** les éléments de stator (20) sont agencés séparément de la voie de transport (12), les éléments de stator (20) étant en particulier agencés en décalage parallèlement à la voie de transport (12).

5. Dispositif de transport selon au moins l'une des revendications précédentes,
**caractérisé en ce que**
les éléments de stator (20) sont pilotables individuellement et/ou **en ce que** les éléments de stator (20) sont montés en parallèle et pilotables en commun.

6. Dispositif de transport selon au moins l'une des revendications précédentes,
**caractérisé en ce que**
l'élément circulant est subdivisé en segments (24a, 24b) qui, vus en direction longitudinale de la voie de transport (12), sont agencés séparés les uns des autres dans l'espace de telle sorte qu'à tout moment, au moins un des segments (24a, 24b) coopère avec l'un des éléments de stator (20).

7. Dispositif de transport selon au moins l'une des revendications précédentes,
**caractérisé en ce que**
l'élément de transport (16) comprend plusieurs unités de transport (14) qui sont couplées les unes aux autres et ont en particulier sensiblement la même construction et/ou **en ce qu'**à chaque unité de transport (14) est associé au moins un segment (24a, 24b) de l'élément circulant.

8. Dispositif de transport selon la revendication 7,
**caractérisé en ce que**
un espace (d₃) entre les éléments de stator (20) et la voie de transport (12) dans une direction perpendiculaire à l'extension longitudinale de la voie de transport (12) est supérieur à un espace (d₂) entre l'élément circulant (24a, 24b) et la voie de transport (12) dans une direction perpendiculaire à l'extension longitudinale de la voie de transport (12) et/ou à un espace (d₁) entre un moyen de guidage (34) prévu pour le guidage de l'élément de transport (16) le long de la voie de transport (12) et la voie de transport (12) dans une direction perpendiculaire à l'extension longitudinale de la voie de transport (12).

9. Dispositif de transport selon la revendication 7 ou 8,
**caractérisé en ce que**
l'élément circulant (24a, 24b) est agencé de telle sorte qu'au passage d'un élément de stator (20), il est agencé entre l'élément de stator (20) et la voie de transport (12).

10. Dispositif de transport selon au moins l'une des revendications précédentes,
**caractérisé en ce que**
sur l'élément de transport (16) est prévu un moyen de guidage (34) pour guider le mouvement de l'élément de transport (16) le long de la voie de transport (12), le moyen de guidage (34) étant agencé de telle sorte qu'au passage d'un élément de stator (20) il est agencé entre l'élément de stator (20) et la voie de transport.

11. Dispositif de transport selon la revendication 1,
**caractérisé en ce que**
la voie de transport comprend un rail (12) qui guide l'élément de transport (16) le long de la voie de transport, l'élément de transport (16) comprenant des roulettes (34) qui sont agencées les unes en face des autres par rapport au rail (12) et qui sont en contact avec des surfaces latérales du rail (12).

12. Dispositif de transport selon la revendication 11,
**caractérisé en ce que**
les roulettes (34) sont agencées symétriquement à un plan qui coïncide avec un plan der symétrie des éléments de stator (20) et/ou de l'élément circulant, le plan de symétrie s'étendant parallèlement à l'extension longitudinale des éléments de stator (20) ou de l'élément circulant (24a, 24b).

13. Dispositif de transport selon la revendication 1,
**caractérisé en ce que**
les unités de stator (22a, 22b) et/ou les tronçons fonctionnels (24a, 24b) sont agencé(e)s symétriquement à un plan médian (S) de la voie de transport (12), qui s'étend en direction longitudinale de la voie de transport (12).
